# EUROPÄISCHE PATENTSCHRIFT

(11) **EP 2 335 519 B1**
(45) Veröffentlichungstag und Bekanntmachung des Hinweises auf die Patenterteilung: **19.09.2012**
(21) Anmeldenummer: 10011550.0
(22) Anmeldetag: 20.12.2002
(51) Int. Cl.: A46B 9/06, A46B 15/00

(54) **Zahnbürste und Verfahren zur Herstellung einer solchen Zahnbürste**
Tooth brush and method for the manufacture of such a tooth brush
Brosse à dents et procédé de fabrication d'une telle brosse à dents

(30) Priorität: 28.12.2001 DE 10164336
(43) Veröffentlichungstag der Anmeldung: 22.06.2011
(62) Teilanmeldung aus: 09000395.5
(73) Patentinhaber: Trisa Holding AG, 6234 Triengen (CH)
(72) Erfinder: Fischer, Franz, 6234 Triengen (CH); Strähler, Reto, 6034 Adigenswil (CH)
(74) Vertreter: Schaad, Balass, Menzl & Partner AG

(56) Entgegenhaltungen:
- WO-A-00/76369
- WO-A1-97/20484
- US-A- 2 042 239
- US-A- 2 129 082
- US-A- 2 139 245

## Beschreibung

Die Erfindung betrifft eine Zahnbürste gemäss dem Oberbegriff von Anspruch 1 und ein Verfahren zu deren Herstellung mit den Merkmalen von Anspruch 16.

Zahnbürsten mit einem konventionellen Borstenfeld bestehend aus Bündeln von Borstenfilamenten, z.B. aus Polyamid (PA) oder Polyester (PBT), und einer zusätzlichen weichelastischen Struktur sind zum Beispiel aus der WO 00/64307 US 2 129 082, US 2 139 245, und der WO 01/21036 bekannt. Die konventionellen Borsten dienen dabei zur gewöhnlichen Reinigung der Zähne, während die weichelastische Struktur unterschiedliche Funktionen erfüllen kann, z.B. Massage des Gaumens, Dämpfung der Putzbewegung, Entfernung von Zahnbelägen, Polieren der Zahnoberfläche, elastische Aufhängung der Borsten und/oder Abdichten ungeschweisster Stellen. Die WO 00/64307 offenbart eine Zahnbürste mit stabförmigen weichelastischen Reinigungselementen, die etwa dieselbe Länge wie die konventionellen Borstenbündel haben und peripher am Kopfteil der Zahnbürste angeordnet sind. Bei der WO 01/21036 sind elastische Reinigungselemente flächig, z.B. wellenförmig gestaltet, und innerhalb des konventionellen Borstenfelds angeordnet. Bei der WO 00/64307 sind mehrere der weichelastischen Reinigungselemente über eine Materialbrücke aus demselben Material miteinander verbunden. Die Reinigungselemente werden nach dem Beborsten des Kopfteils der Zahnbürste mit konventionellen Borsten durch Umspritzen des Kopfteils hergestellt. Nachteilig hieran ist, dass die Borstenfilamente vor der Herstellung der weichelastischen Struktur gebrauchsfertig gemacht werden müssen, z.B. durch Abrunden der Borstenbündel oder Herstellen einer vorbestimmten Profilierung. Anschliessend ist ein erneutes Einsetzen in das Spritzgiesswerkzeug zur Herstellung der weichelastischen Struktur notwendig. Dabei können die Borstenbündel beschädigt oder verschmutzt werden. Die herstellbaren Formen der weichelastischen Struktur sind unter anderem aus entformungstechnischen Gründen beschränkt.

Der Erfindung liegt die Aufgabe zugrunde, eine Zahnbürste mit konventionellen Borsten und einer weichelastischen Struktur zur Verfügung zu stellen, die auf einfache Weise herstellbar ist. Des weiteren soll ein entsprechendes Herstellungsverfahren angegeben werden.

Die Aufgabe wird gelöst durch eine Zahnbürste mit den Merkmalen von Anspruch 1 sowie durch ein Verfahren zur Herstellung einer solchen Zahnbürste mit den Merkmalen von Anspruch 16. Vorteilhafte Weiterbildungen ergeben sich aus den abhängigen Ansprüchen, der Beschreibung und den Zeichnungen.

Erfindungsgemäss ist bei einer Zahnbürste der eingangs genannten Art wenigstens eine weichelastische Struktur, z.B ein Reinigungselement, an einem Trägerelement angeordnet, das aus einem Hartmaterial besteht. Dieses Trägerelement ist mit dem Kopfteil verbunden. Das Trägerelement und/oder die weichelastische Struktur weist Aussparungen auf, durch die die Borstenfilamente hindurchgeführt und zur Befestigung am Trägerelement mit ihren im Anwendungsfall dem Kopfteil zugewandten rückwärtigen Enden aufgeschmolzen, verschweisst oder verklebt sind. Diese AFT (Anchor Free Tufting) Technologie hat den Vorteil, dass sich weitgehend beliebige Borstenanordnungen, insbesondere auch flächige Borstengebilde, realisieren lassen. Das Trägerelement wird insbesondere mittels Ultraschallschweissen mit dem Kopfteil verbunden, z.B. wie in der DE 200 06 311 U beschrieben.

Eine solche Zahnbürste hat Vorteile bei der Herstellung, da das Zusatzteil, d.h. das mit der weichelastischen Struktur versehene Trägerelement, separat hergestellt und auf einfache Weise mit dem Kopfteil verbunden werden kann.

Die Verbindung des Trägerelements mit dem Kopfteil kann auf mechanischem Wege durch Verklemmen oder Verschnappen oder Nieten, chemisch durch Kleben, durch Ultraschallschweissen oder thermisch durch Schweissen oder sonstige Wärmezufuhren hergestellt werden. Herstellungstechnisch bevorzugt ist, dass das Trägerelement aus demselben Material wie das Kopfteil besteht, da in diesem Fall nur eine Hartkomponente zur Herstellung der Bürste bereitgehalten und nicht auf gegenseitige Materialverträglichkeit geachtet werden muss. Dies hat insbesondere beim Ultraschallschweissen Vorteile.

Die Anordnung der weichelastischen Struktur an einem aus einem Hartmaterial bestehenden Trägerelement hat folgende Vorteile: Das Zusatzteil kann separat vom übrigen Zahnbürstenkörper, bestehend aus Handgriff und Kopfteil, gefertigt und für den Endgebrauch vorbereitet werden. In einem einfachen weiteren Schritt erfolgt die Verbindung des Trägerelements mit dem Kopfteil, wobei sämtliche der genannten Verbindungstechniken verwendet werden können und das harte Trägerelement vorzugsweise daran angepasst geformt ist. Das Trägerelement kann beispielsweise so geformt werden, dass es im späteren Verbindungsschritt das Kopfteil in klemmender Weise umgreift. Das Zusatzteil ist aufgrund des harten Trägerelements auf einfache Weise zu handhaben und kann deutlich leichter gegriffen werden als ein vollständig aus einem weichelastischen Material hergestelltes Zusatzteil.

Das Zusatzteil ist im Verhältnis zur übrigen Zahnbürste klein. Daher sind auch die benötigten Werkzeuge klein und kostengünstig. Der Zahnbürstengrundkörper und die Beborstung kann auch bei späterer Ausstattung mit unterschiedlichen Zusatzteilen mit einem Standardwerkzeug hergestellt werden. Um Zahnbürsten mit unterschiedlichen Zusatzteilen herzustellen, muss lediglich das Zusatzteil bzw. das entsprechende Werkzeug dafür ausgetauscht werden, was auf einfache und kostengünstige Weise geschehen kann.

Ein weiterer Vorteil der separaten Herstellung von Zusatzteil und Grundkörper ist, dass beliebige Formen von weichelastischen Reinigungselementen realisiert werden können, z.B. auch solche, die die konventionellen Borsten kreuzen, berühren oder beim Einsetzen des Zusatzteils verdrängen. Durch die separate Herstellung ist die Entformung der weichelastischen Struktur unproblematisch. Es sind Geometrien im Spritzgiessverfahren herstellbar, die nur unter grossem Aufwand entformbar wären, wenn das Reinigungslement direkt auf dem beborsteten Kopfteil angebracht würde.

Bisher wurde die weichelastische Strukturaus herstellungstechnischen Gründen aus demselben Material wie etwaige weichelastische Komponenten am Griffteil hergestellt. Durch die Erfindung ergibt sich für das Material der Struktur eine grössere Freiheit, so dass beispielsweise ein anderer Härtegrad verwendet werden kann. Durch eine unlösbare Verbindung des Zusatzteils mit dem Kopfteil wird verhindert, dass sich das Zusatzteil während des Gebrauchs ablöst, und die Verschluckungsgefahr ausgeschlossen.

Die konventionellen Borsten sind beispielsweise direkt am Kopfteil, an einer als weiteres Trägerelement wirkenden Borstenplatte oder auch am Trägerelement für die weichelastischen Reinigungselemente befestigt, wobei alle Varianten Vorteile aufweisen. Bei der Befestigung der Borsten am Kopfteil bzw. an der Borstenplatte können die weichelastische Struktur und die konventionellen Borsten vor dem Zusammensetzen von Kopfteil und Zusatzteil unabhängig voneinander für den späteren Gebrauch vorbereitet werden, so dass ein gegenseitiges Beschädigen oder Verschmutzen verhindert wird.

Das Anbringen von sowohl konventionellen Borsten als auch der weichelastischen Struktur am Trägerelement hat den Vorteil, dass eine beliebige räumliche Anordnung der beiden Komponenten möglich ist. Ein solches vorbereitetes Trägerelement kann zur Endfertigung mit verschiedenen Zahnbürstengrundkörpern verbunden werden, so dass mit wenigen Grundkörpern eine grosse Anzahl verschiedener Zahnbürsten realisierbar ist.

Die konventionellen Borsten können in beiden Fällen vor oder nach dem Anbringen der weichelastischen Struktur für den Gebrauch vorbereitet werden. Sind beide Komponenten am Trägerelement vorgesehen, wird bevorzugt zuerst die weichelastische Struktur, einschliesslich etwaiger Reinigungselemente, angeformt und das Trägerelement anschliessend mit Borsten besetzt, welche beispielsweise durch Aussparungen in der weichen oder harten Komponente hindurchgeführt sein können.

Die Herstellung des Zusatzteils, d.h. des Trägerelements mit einem oder mehreren weichelastischen Reinigungselementen, erfolgt bevorzugt im Zwei- oder Mehrkomponentenspritzgiessverfahren. Dabei wird vorzugsweise eine unlösbare Verbindung zwischen den Komponenten hergestellt.

Die weichelastische Struktur ist bevorzugt auch seitlich am Trägerelement angeordnet, z.B. angespritzt, wobei sie im montierten Zustand seitlich mit der Aussenkontur des Kopfteils abschliesst oder über diese hinausgeht. Sie dient z.B. zum Abdichten ungeschweisster Stellen, zum Massieren des Gaumens, z.B. durch angespitzte leicht abstehende elastische Elemente, oder als Aufprallschutz beim Putzen.

Vorzugsweise besteht das weichelastische Reinigungselement aus einem insbesondere thermoplastischen Elastomer, z.B. aus natürlichem oder synthetischem Gummi. Für das Trägerelement wird bevorzugt das für den Zahnbürstengrundkörper eingesetzte Material verwendet, insbesondere Polypropylen, Styrol-Acryl-Nitril, Polyester, Acryl-Nitril-Butadienstyrol (ABS) oder Isoplast®. Die Shore A Härte der weichen Komponente ist vorzugsweise geringer als 90 und liegt besonders bevorzugt unter 50.

Da sich gummielastisches Material, insbesondere ein thermoplastisches Elastomer, aufgrund der starken Dämpfung der Ultraschallschwingungen nur bedingt Ultraschall verschweissen lässt, wird die Schweissfläche zwischen Trägerelement und Kopfteil bevorzugt zumindest teilweise von der weichelastischen Komponente freigehalten. Vorzugsweise wird dazu der Anspritzpunkt der Weichkomponente an der borstentragenden Seite des Trägerelements gewählt, damit keine Materialbrücken aus der Weichkomponente die Schweissfläche verkleinern. Für den Fall, dass dennoch im Bereich der Schweissfläche weichelastische Elemente angeordnet werden sollen, wird deren Lage vorzugsweise seitlich von der Längsachse der Zahnbürste gewählt. Damit entstehen unverschweisste Stellen ebenfalls seitlich am Trägerelement, während der in Längsrichtung vordere und hintere Bereich zwischen Trägerelement und Kopfteil verschweisst werden kann. Somit ist ein guter Halt des Trägerelements gewährleistet, da durch die Putzbewegung und die entsprechenden Hebelkräfte vor allem der vordere bzw. hintere Bereich und weniger die Seitenbereiche belastet werden. Eine nur punktuelle Verschweissung mit ungeschweissten Stellen kann auch gezielt eingesetzt werden, damit Bürstenkopf und Trägerelement gegeneinander beweglich sind und so eine gewisse Flexibilität des gesamten Bürstenkopfes erreicht wird.

Die weichelastische Struktur kann nach Art einer Dichtlippe auch zum zusätzlichen Abdichten ungeschweisster Stellen dienen. Dadurch wird vorteilhaft der Raum zwischen dem Trägerelement und dem Kopfteil gegen das Eindringen von Wasser abgedichtet. Somit können sich in diesem Bereich keine Keime ansammeln, und die Bürste ist hygienischer. Um eine angemessene Dichtfunktion zu erreichen, ist die Shore A Härte der Weichkomponente vorzugsweise geringer als 50.

Beispiele für die Erfindung sind in den Zeichnungen dargestellt und nachfolgend beschrieben. Es zeigen rein schematisch:
- Fig. 1a-d: Ansichten einer erfindungsgemässen Zahnbürste in verschiedenen Montagestadien, wobei das Zusatzteil durch Nieten am Kopfteil befestigt wird;
- Fig. 2a-e: Ansichten einer weiteren Zahnbürste, deren Zusatzteil durch Nieten befestigt wird;
- Fig. 3a-e: Ansichten einer Zahnbürste, deren Zusatzteil durch Schweissen befestigt wird;
- Fig. 4a-e: Ansichten einer Zahnbürste, deren Zusatzteil mittels einer Schnappverbindung befestigt wird;
- Fig. 5a-e: Ansichten einer weiteren Zahnbürste, deren Zusatzteil durch eine Schnappverbindung befestigt wird;
- Fig. 6a-f: Ansichten einer Zahnbürste, bei der das Zusatzteil in klemmender Weise befestigt wird;
- Fig. 7a-e: die Herstellung einer Zahnbürste im AFT Verfahren;
- Fig. 8a-e: Ansichten einer weiteren Zahnbürste, deren Zusatzteil durch eine Schnappverbindung befestigt wird;
- Fig. 9a-f: Ansichten einer weiteren Zahnbürste, deren Zusatzteil mit Spiel am Kopfteil befestigt ist;
- Fig. 10a-j: die Herstellung einer weiteren Zahnbürste im AFT Verfahren;
- Fig. 11a-c: Ansichten einer Zahnbürste mit einer seitlichen Umrandung aus weichelastischem Material.

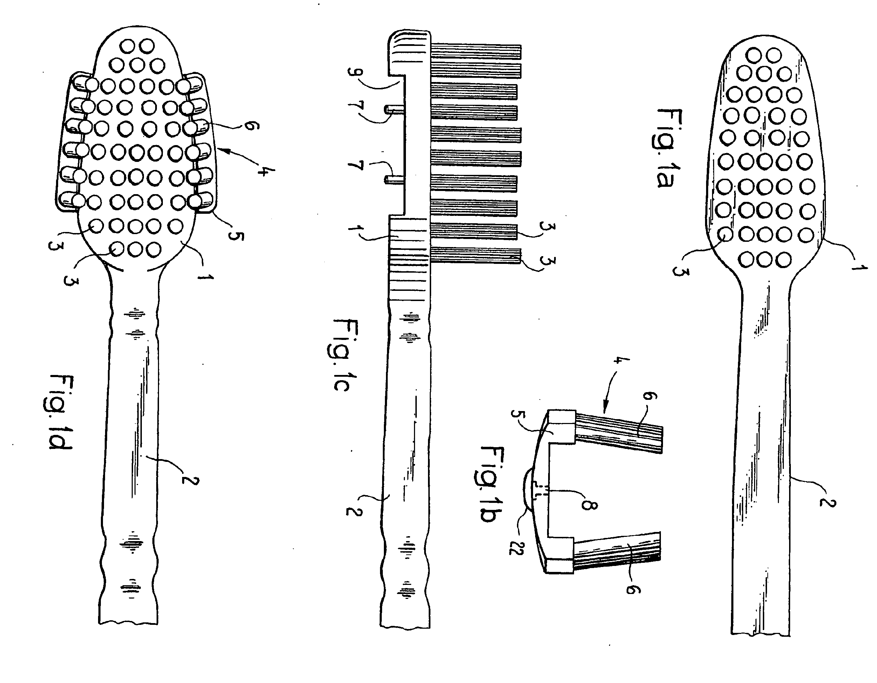

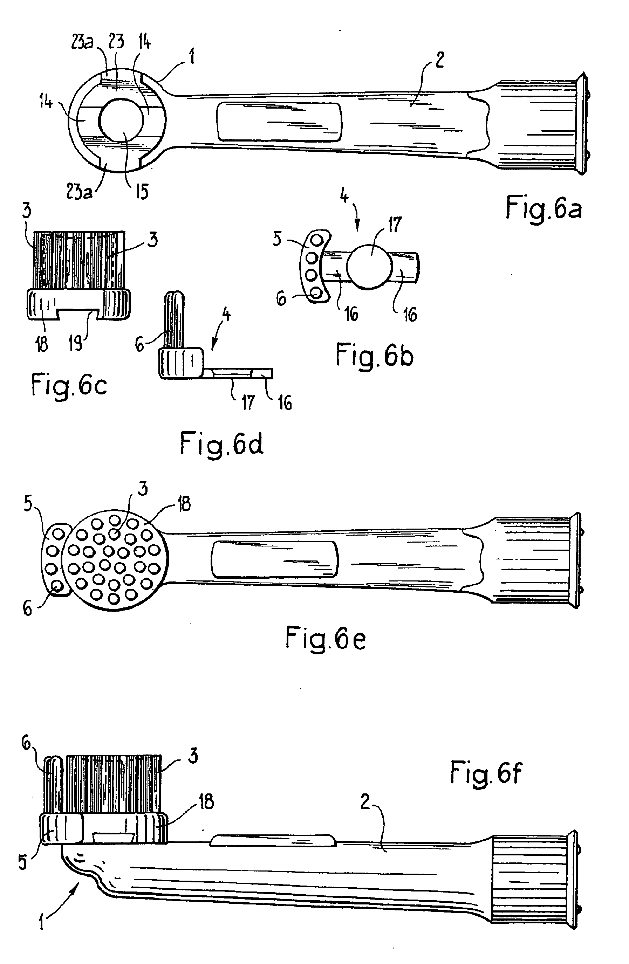

Alle dargestellten Zahnbürsten haben einen Grundkörper mit einem Kopfteil 1 und einem Griffteil 2, der nur teilweise dargestellt ist. Ein Zusatzteil 4 mit mehreren weichelastischen Reinigungselementen 6 unterschiedlicher Form, die mit einem Trägerelement ebenfalls unterschiedlicher Form verbunden sind, ist bei der fertigen Zahnbürste mit dem Kopfteil 1 verbunden. Das Kopfteil 1 ist des weiteren direkt (Fig. 1 - 5) bzw. indirekt (Fig. 6) mit Bündeln 3 aus konventionellen Borstenfilamenten versehen. Material und Anordnung der Borstenbündel 3 kann unterschiedlich sein. Im Folgenden wird nur auf die Besonderheiten der einzelnen Ausführungsbeispiele eingegangen. Dabei sind einander entsprechende Elemente mit gleichen Bezugszeichen bezeichnet.

Fig. 1a, c zeigt eine Zahnbürste, deren Kopfteil 1 bereits mit Borstenbündeln 3 versehen wurde. Das in Fig. 1b dargestellte Zusatzteil 4 hat ein im Schnitt U-förmiges Trägerelement 5 aus einem Hartmaterial, insbesondere demselben Kunststoff, der zur Herstellung des Kopfteils 1 bzw. des gesamten Grundkörpers verwendet wurde. Mit dem Trägerelement 5 sind weichelastische Reinigungselemente 6, hier in Form von geraden Stäben, fest verbunden. Die Reinigungselemente 6 sind leicht aus der Vertikalen aufeinander zu geneigt und schliessen mit der Vertikalen einen Winkel von 5 bis 30° ein. Auf diese Weise berühren die elastischen Reinigungselemente 6 die konventionellen Borstenbündel 3 (Fig. 1d) und können diese sogar kreuzen (nicht dargestellt). Eine derartige Stellung ist mit konventionellen Herstellungsverfahren nur mit aufwendigen Verdrängungstechniken realisierbar.

Das Trägerelement 5 ist in seiner Form an eine in Fig. 1c sichtbare Aussparung 9 im den Borstenbündeln 3 abgewandten Bereich des Kopfteils 1 angepasst. In diesem Bereich befinden sich des weiteren Stifte 7, die durch ein Loch 8 im Trägerelement 5 hindurchgesteckt werden können. Die Stifte 7 werden kalt oder warm verformt und so im Loch 8 dauerhaft fixiert. Eine Aufsicht auf die fertiggestellte Zahnbürste zeigt Fig. 1d.

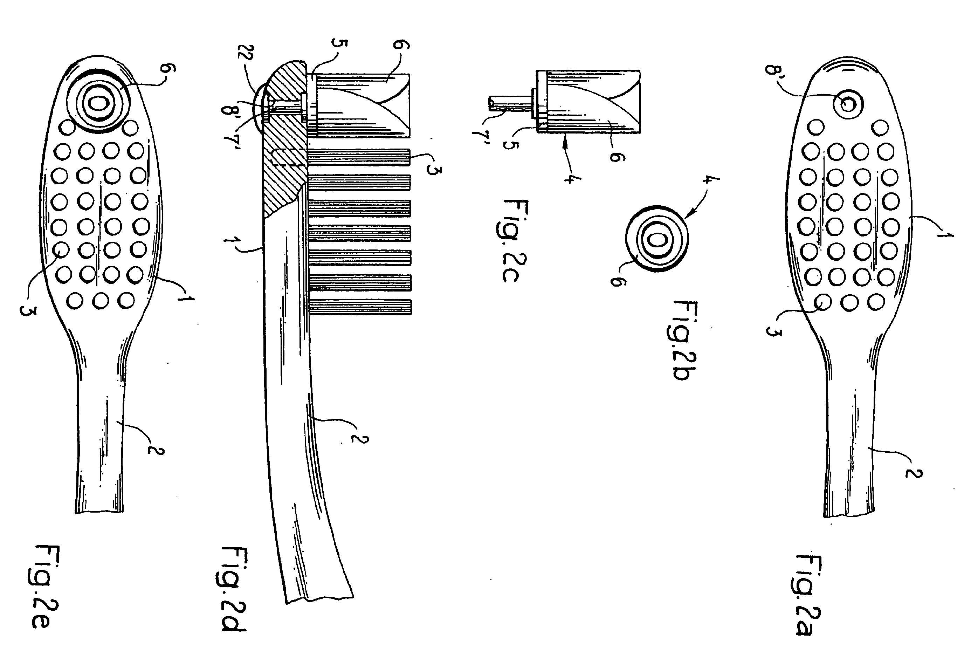

Der untere Bereich des Lochs 8 oder des gesamten Kopfteils 1 kann aus ästhetischen oder hygienischen Gründen durch eine Schutzschicht 22 aus weichem Kunststoff abgedeckt werden (vgl. Fig. 2d). Ebenso werden die Grenzbereiche zwischen dem Trägerelement 5 und dem Kopfteil 1 vorzugsweise durch weichen Kunststoff abgedeckt. Als Material hierfür wird beispielsweise das Weichmaterial verwendet, das auch für den Griffbereich der Zahnbürste verwendet wird. Vorzugsweise wird die Schutzschicht bereits während der Herstellung des Griffteils im Mehrkomponentenspritzgiessverfahren angespritzt. Die Kunststoffschicht kann jedoch auch direkt an das Trägerelement angeformt sein.

Ein weiteres Beispiel für eine Zahnbürste, deren Zusatzteil 4 durch eine Nietverbindung mit dem Kopfteil 1 verbunden wird, ist in Fig. 2a-e dargestellt. Das Zusatzteil besteht hier aus einem tellerförmigen Trägerelement 5, mit dem flächige weichelastische Reinigungselemente 6 rosettenförmig verbunden sind. Das Trägerelement 5 weist einen Stift 7' auf, mit dem das Zusatzteil 4 durch ein entsprechend vorbereitetes Loch 8' im vorderen Ende des Kopfteils durchgesteckt und durch Verformen des Stiftes 7' fixiert werden kann. Die weichelastischen Reinigungselemente 6 befinden sich im Bereich der Spitze des Kopfteils 1. In Richtung des Griffteils 2 schliesst sich das Borstenfeld mit einzelnen Borstenbündeln 3 an. Eine Schutzschicht 22 deckt den Bereich des Lochs 8' ab.

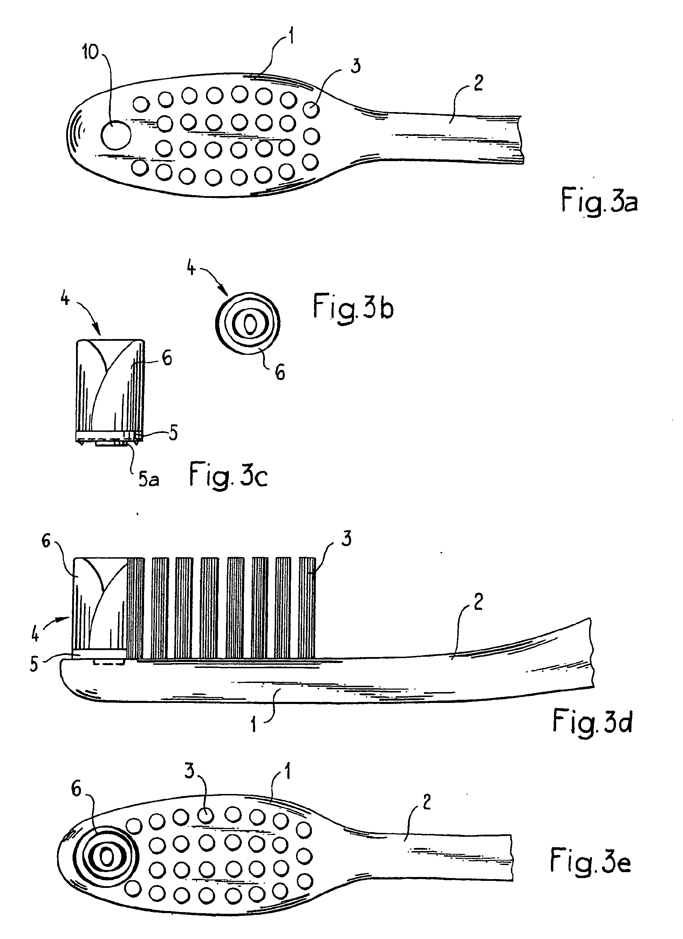

Fig. 3a-e zeigt ein weiteres Beispiel für eine Zahnbürste, die im Ergebnis einer Zahnbürste gemäss Fig. 2 ähnelt. Das Zusatzteil 4 mit einem tellerförmigen Trägerelement 5 und rosettenartigen weichelastischen Reinigungselementen 6 wird vorliegend mittels einer Schweissverbindung mit dem Kopfteil 1 verbunden. Dazu weist der vordere Bereich des Kopfteils eine tellerartige Aussparung auf, in die das Trägerelement 5 dank einer entsprechend strukturierten Unterseite 5a mittels Ultraschallschweissen dauerhaft eingefügt wird. Eine Seitenansicht der fertigen Zahnbürste zeigt Fig. 3d, die Aufsicht auf das kombinierte Borstenfeld aus konventionellen Borstenbündeln 3 und weichelastischen Reinigungselementen 6 zeigt Fig. 3e.

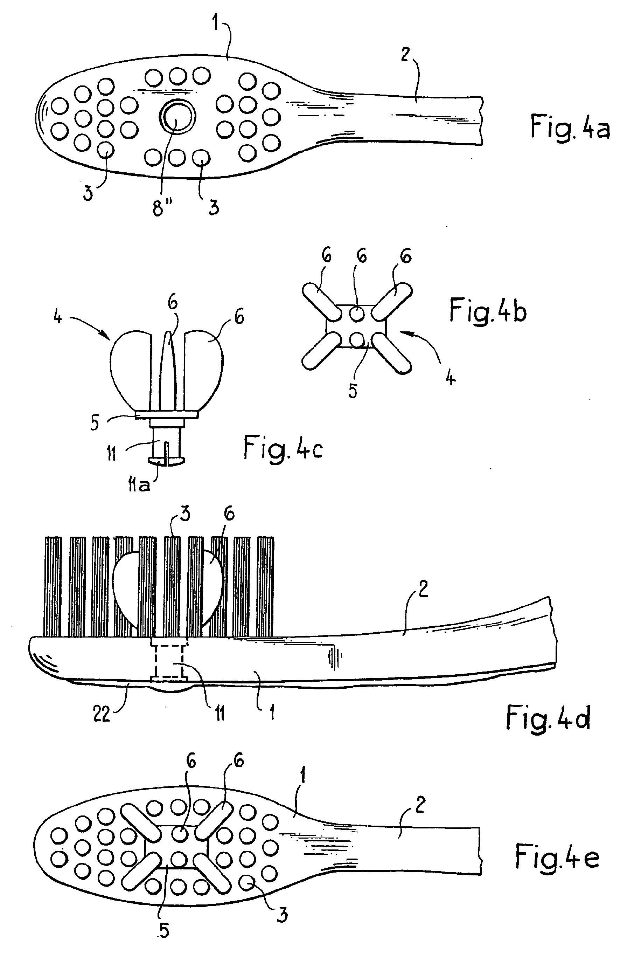

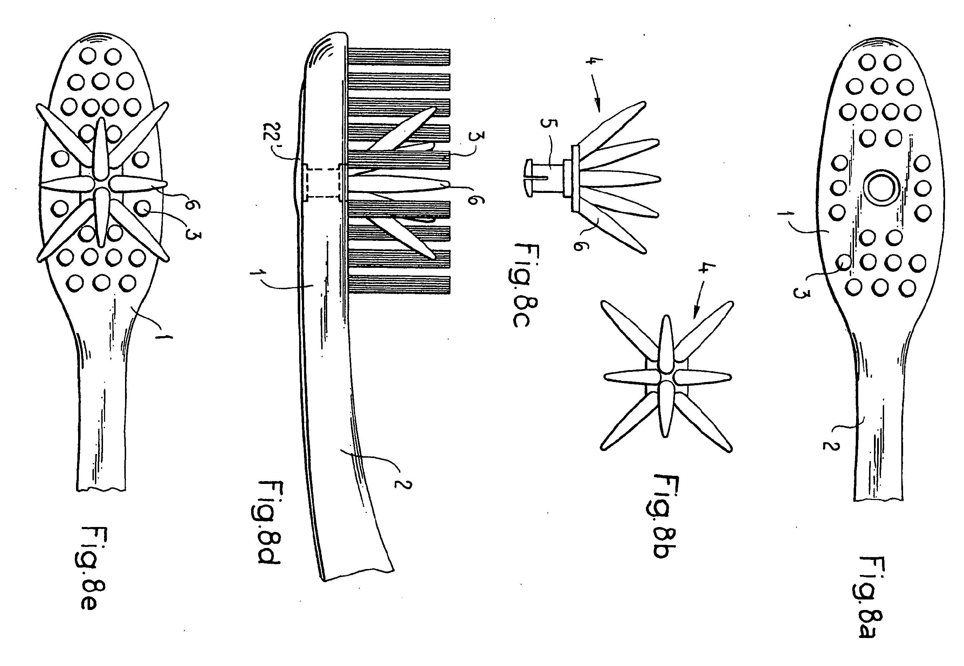

Das Zusatzteil 4 der in Fig. 4a-e dargestellten Zahnbürste ist mittels einer Schnappverbindung in der Mitte des Kopfteils 1 befestigt. Das Zusatzteil 4 umfasst ein rechteckiges Trägerelement 5, an dessen Ecken flügelartige weichelastische Reinigungselemente 6 angeordnet sind. Auf dem Trägerelement 5 befinden sich des weiteren zwei stabförmige Reinigungselemente 6 (Fig. 4b, c). Wie in Fig. 4a dargestellt, weist das Kopfteil 1 ein mittiges Loch 8 " auf, das zum Durchstecken eines federnd gestalteten Fortsatzes 11 am Trägerelement 5 dient. Zusatzteil 4 und Kopfteil 1 werden durch eine Schnappverbindung miteinander verbunden, die aufgrund des am unteren Ende 11a des Fortsatzes 11 vergrösserten Querschnitts nicht ohne weiteres lösbar ist. Das Borstenfeld der konventionellen Borstenbündel 3 ist derart konfiguriert, dass die flügelartigen Reinigungselemente 6 zwischen den konventionellen Borstenbündeln 3 Platz finden, wie in Fig. 4a und 4e dargestellt. Das Zusatzteil 4 wird separat gefertigt und anschliessend in das Kopfteil 1 mit dem vorbereiteten Borstenfeld eingesetzt. Dadurch können auch durch das konventionelle Borstenfeld durchgreifende Strukturen der weichelastischen Reinigungselemente 6 realisiert werden, wie die über Eck angeordneten flügelartigen Elemente aus Fig. 4b-e oder die in verschiedene Raumrichtungen weisenden, aufgefächerten stiftförmigen Reinigungselemente aus Fig. 8. Die Unterseite des Kopfteils 1 ist aus hygienischen oder ästhetischen Gründen durch eine Schicht 22 aus weichelastischem Material abgedeckt.

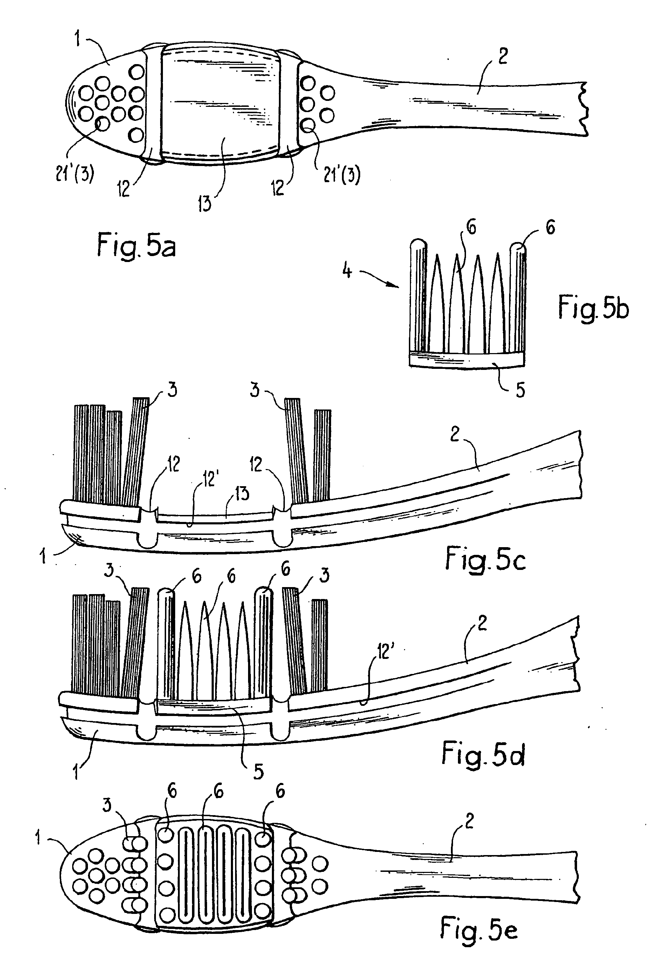

Fig. 5a-e zeigen ein weiteres Beispiel für eine Schnappverbindung zwischen dem Zusatzteil 4 und dem Kopfteil 1 einer erfindungsgemässen Zahnbürste. Das Kopfteil 1 weist innerhalb des Borstenfelds aus konventionellen Borstenbündeln 3 einen vorbereiteten Bereich 13 für die Aufnahme des Zusatzteils 4. Dieser Bereich 13 besteht aus einer Vertiefung, an deren Rand senkrecht zur Ausrichtung des Handgriffs 2 jeweils eine Nut 12 verläuft, die dem Kopfteil 1 wie auch die an seinem seitlichen Rand verlaufenden Nuten 12' eine gewisse Elastizität bzw. federnde Wirkung gibt. Der vorbereitete Bereich 13 ist geringfügig kleiner als die Grundfläche des Trägerelements 5, so dass dieses passend und in klemmender Weise in den Bereich 13 eingesetzt werden kann. Wie aus der Aufsicht in Fig. 5e erkennbar, hat das Zusatzteil sowohl stabförmige als auch flächige, quer zur Ausrichtung des Handgriffs 2 angeordnete Reinigungselemente.

Fig. 6a-f zeigt ein weiteres Beispiel für eine erfindungsgemässe Zahnbürste, hier eine Aufsteckzahnbürste für eine elektrisches Zahnreinigungsgerät. Die konventionellen Borstenbündel 3 sind an einer separaten Borstenplatte 18 befestigt, die im montierten Zustand mit dem daran angepassten Kopfteil 1 der Zahnbürste bzw. einer darauf dreh- oder schwenkbar befestigten Scheibe 23 verbunden ist. Die weichelastischen Reinigungselemente 6, hier stabförmig, sind an einem in der Aufsicht leicht gebogenen Trägerelement 5 befestigt, das einen flächigen Fortsatz 16 aufweist, der im wesentlichen senkrecht zur Ausrichtung der Reinigungselemente 6 orientiert ist. Mit diesem Fortsatz 16 lässt sich das Zusatzteil 4 in eine entsprechend geformte Nut 14 in der Scheibe 23 1 einführen. In der Mitte des Kopfteils 1 und der Nut 14 ist eine runde Aussparung 15 angeordnet, in die eine entsprechendes Gegenelement 17 am Fortsatz 16 des Zusatzteils 4 eingreift. Damit werden Zusatzteil 4 und Kopfteil 1 passend und in klemmender Weise miteinander verbunden. Die Borstenplatte 18 hat an ihrem unteren Ende eine Nut 19 mit der die Borstenplatte 18 an der Scheibe 23 bzw. deren seitlichen Fortsätzen 23 befestigt werden kann. Das Zusatzteil 4 wird in der dargestellten Ausführungsform durch die Scheibe 23 mitbewegt. Als Alternative kann das Zusatzteil 4 direkt am Kopfteil 1 befestigt werden und rotiert nicht mit.

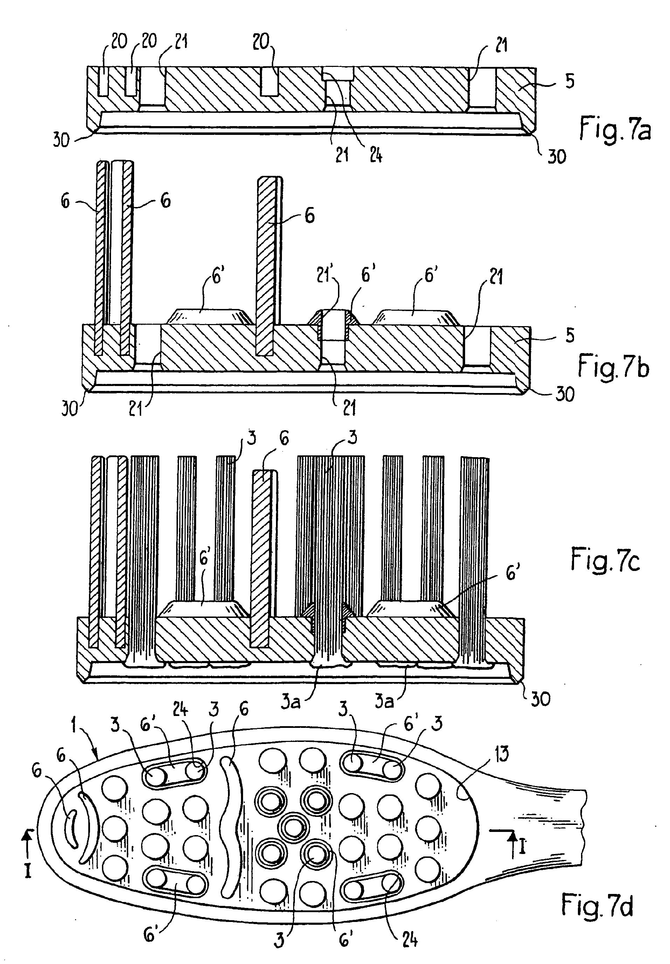

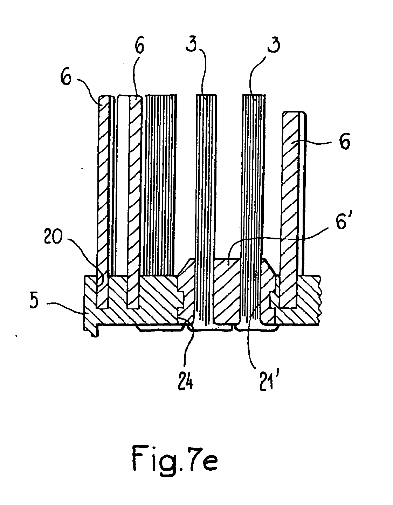

Figur 7a-e zeigen ein Beispiel für die Herstellung einer Zahnbürste mittels der AFT Technologie. Die Figuren 7a-c zeigen Schnittansichten des Trägerelements 5 in verschiedenen Verfahrensstadien, und zwar vor dem Bestücken mit weichelastischen Reinigungselementen 6 und konventionellen Borstenbündeln 3 (Fig. 7a), nach dem Aufbringen des weichelastischen Materials (Fig. 7b) und nach dem Aufbringen der Borsten (Fig. 7c). Das Trägerelement 5 ist in seiner äusseren Form an die Abmessungen eines vorbereiteten Bereichs 13 in Form einer flachen Aussparung im Kopfteil 1 der Zahnbürste angepasst. Das Trägerelement 5 weist vorbereitete Bereiche 20 auf, in die die weichelastischen Reinigungselemente 6 angebracht, insbesondere angespritzt, werden. Des weiteren hat das Trägerelement 5 Aussparungen 24, die ganz oder teilweise mit weichelastischem Material 6' gefüllt werden, vgl. auch die Detailzeichnung Fig. 7e. Des weiteren sind Löcher 21 im Trägerelement 5 vorhanden, durch die Borstenbündel 3 durchgesteckt und an der Rückseite durch Anschmelzen ihrer rückwärtigen Enden 3a befestigt werden. Die elastischen Materialbereiche 6' haben weitere Löcher 21', die ebenfalls zur Aufnahme von Borstenbündeln 3 dienen, welche auf die gleiche Art befestigt werden. Die Materialbereiche 6' können ein oder mehrere Borstenbündel 3 aufnehmen. Die im elastischen Material 6' verankerten Borstenbündel 3 sind daher besonders elastisch verankert bzw. aufgehängt. Weitere Borstenbündel 3 werden direkt auf dem Trägerelement 5 befestigt. Das mit Borstenbündeln und der weichelastischen Struktur 6, 6' bestückte Trägerelement 5 wird anschliessend in den vorbereiteten Bereich 13 eingesetzt.

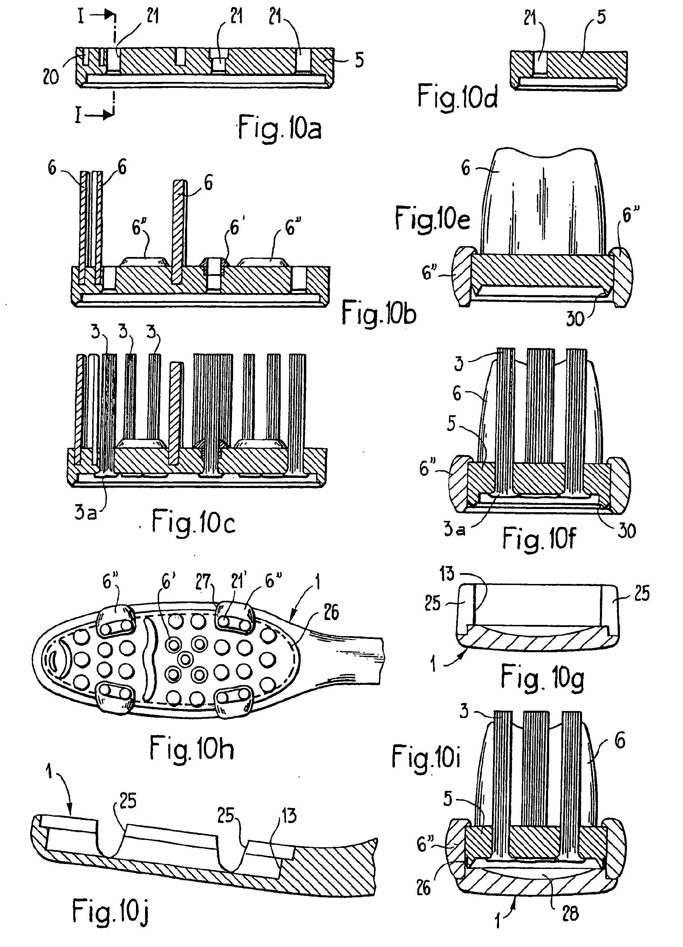

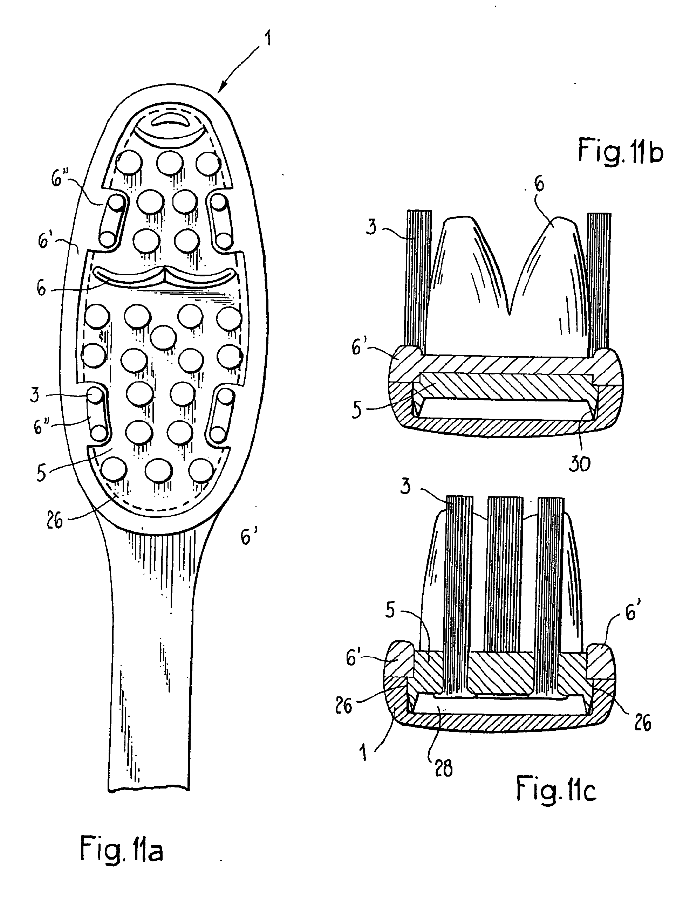

Die im Anwendungsfall dem Boden der Ausnehmung 13 zugewandte Kante 30 des Trägerelements 5 ist spitz gestaltet, ebenso im Beispiel aus Fig. 10 und 11. Diese spitz zulaufende Kante 30 dient beim Ultraschallschweissen zum Verbinden mit dem Kopfteil 1 als Energiekonzentrator sowie Materialreservoir für zu verflüssigendes Material.

Die AFT Technologie kommt ohne Anker oder Klammern zum Befestigen der Borstenfilamente aus, die stattdessen direkt an der Trägerplatte angeschweisst werden. Damit wird die Breite eines Borstenbündels nicht durch den Anker bestimmt, so dass sich auch feinere Strukturen, insbesondere auch flächige Borstenanordnungen, realisieren lassen.

Technisch ist es auch möglich, beim AFT-Verfahren die Borstenfilamente vor dem Anbringen an die Trägerplatte für den Gebrauch vorzubereiten. Realisiert wird derzeit jedoch die Variante, bei der die Borsten erst nach dem Anbringen an die Trägerplatte bearbeitet werden.

Fig. 8a-e zeigt eine Variante zur Zahnbürste aus Fig. 4. Das Borstenfeld aus konventionellen Borstenbündeln 3 entspricht Fig. 4. Das Zusatzteil 4 hat eine Mehrzahl von sternförmig auseinandergehenden stiftförmigen Reinigungselementen 6, die durch die konventionellen Borstenbündel 3 durchgreifen (Fig. 8d, e). Der Befestigungsmechanismus entspricht Figur 4. Eine Schicht 22 aus weichelastischem Material deckt die Unterseite des Kopf- und Griffteils 1,2 ab.

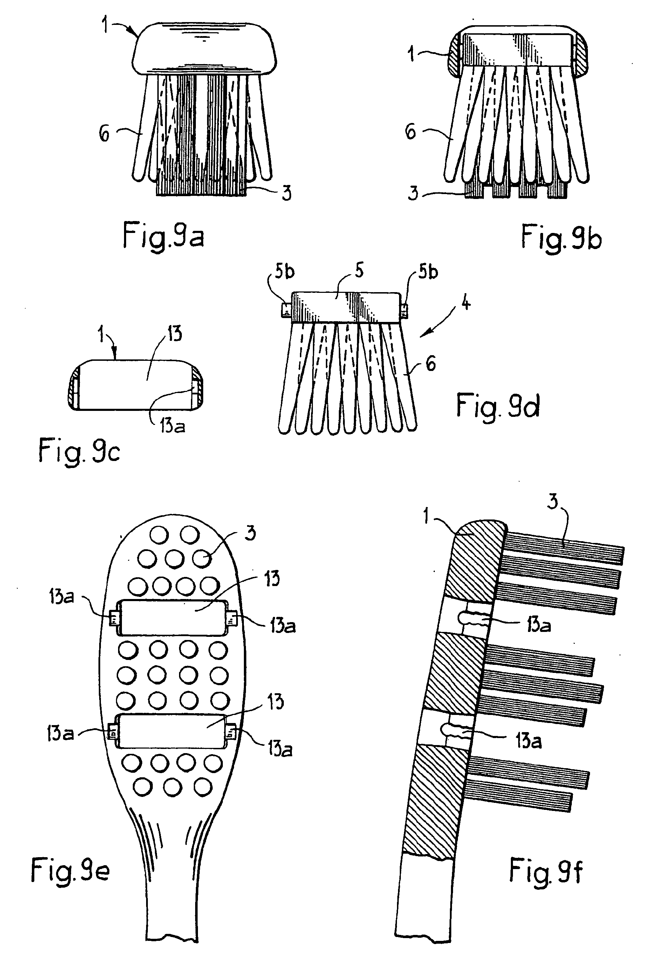

Fig. 9a-f zeigen ein weiteres Beispiel für eine erfindungsgemässe Zahnbürste. Das Kopfteil 1 weist einen vorbereiteten Bereich 13 für das Trägerelement 5 des Zusatzteils 4 auf, die grösser als das Trägerelement 5 selbst ist. Der Bereich 13 ist beispielsweise ein vollständig durch das Kopfteil 1 durchgehendes Loch, vgl. Schnittzeichnungen Fig. 9b, d, e. Der Bereich 13 hat zwei seitliche Nuten 13a, deren Form an die Form zweier seitlicher Fortsätze 5b des Trägerelements 5 angepasst ist. Dieses wird in das Kopfteil 1 eingesetzt und verrastet dort. Aufgrund des Spiels des Trägerelements 5 innerhalb des Bereichs 13, das ein seitliches Verschieben und/oder eine Schwenkbewegung um die durch die Fortsätze 5b definierte Achse ermöglicht, ergibt sich eine besondere Elastizität bzw. federnde Wirkung des Zusatzteils 4. Die Rückseite des Kopfteils 1 kann wiederum mit einer Schicht aus Weichmaterial abgedeckt sein.

Fig. 10a-j zeigt ein weiteres Beispiel für eine mittels AFT hergestellte Zahnbürste. Die Figuren 10a-c entsprechen den Figuren 7a-c und zeigen jeweils die Trägerplatte 5 in verschiedenen Verfahrensstadien. Fig. 10d-f zeigen die dieselbe Trägerplatte 5 im Schnitt entlang der in Fig. 10a angedeuteten Linie I-I. Das mittig angeordnete weichelastische Element 6 ist flächig bzw. segelartig und in der Aufsicht (Fig. 10h) wellenförmig. Wie in Fig. 10e+f dargestellt, umfasst die weichelastische Struktur seitlich angeformte Bereiche 6", die im montierten Zustand (Fig. 10h) den Zahnbürstenkopf 1 seitlich begrenzen und mit der Aussenkontur des Kopfteils nahezu bündig abschliessen. Sie dienen beispielsweise als Aufprallschutz und/oder zur zusätzlichen Massage des Gaumens. Die Bereiche 6" weisen ebenfalls Löcher 21' auf zur Aufnahme von Borstenbündeln 3, die dadurch elastisch aufgehängt und beim Putzen besonders nachgiebig sind.

Das mit konventionellen Borsten 3 und der weichelastischen Struktur 6, 6', 6" versehene Trägerelement 5 wird in eine Ausnehmung 13 im Bürstenkopf 1 eingesetzt. Der Bürstenkopf 1 ist in Fig. 10g+j ohne Trägerelement 5 sowie in Fig. 10h+i mit eingesetztem Trägerelement 5 in verschiedenen Ansichten dargestellt. An seinem seitlichen Rand weist der Bürstenkopf 1 bzw. die Ausnehmung 13 seitliche Öffnungen 25 auf, die an die zuvor an das Trägerelement 5 angespritzten seitlichen weichelastischen Bereiche 6" angepasst sind.

Das Trägerelement 5 wird mittels Ultraschallschweissen mit dem Bürstenkopf 1 verbunden. Die Schweissfläche 26 ist gestrichelt angedeutet. Um die Verschweissung zu realisieren, weist das Trägerelement an seinem unteren Rand einen Schweissrand 26' auf, der bei der Montage auf dem Grund der Aussparung 13 aufliegt, wobei die Berührungsfläche die Schweissfläche 26 definiert. Der Schweissrand 26' schmilzt unter Ultraschalleinfluss, so dass die beiden Teile 5 und 1 miteinander verbunden werden.

Da sich gummielastisches Material nur bedingt Ultraschall schweissen lässt, wird die Schweissfläche 26 möglichst frei davon gehalten, wie z.B. bei der Zahnbürste aus Fig. 7, oder nur minimal unterbrochen, wie bei der Zahnbürste aus Fig. 10. Ziel ist in beiden Fällen die vollständige Abdichtung des Hohlraums 28 zwischen Trägerelement 5 und Kopfteil 1, um Eindringen von Wasser und Keimen zu verhindern. Bevorzugt wird dazu der Anspritzpunkt des weichelastischen Materials an der borstentragenden Vorderseite des Trägerelements 5 gewählt, damit keine unnötigen Materialbrücken die Schweissfläche 26 verkleinern. Falls weitere weichelastische Elemente am Kopfteil 1, insbesondere an dessen Rückseite, vorhanden sind, wird deren Lage so gewählt, dass sie die Schweissfläche 26 nicht verkleinern. Beispielsweise liegen sie und der entsprechende Anspritzpunkt vollständig innerhalb des durch die Schweissfläche 26 definierten Bereichs an der Rückseite des Kopfteils 1 (nicht dargestellt). Bevorzugt wird die gesamte Berührungsfläche zwischen Kopfteil 1 und Trägerelement 5 zu mindestens 25% verschweisst, besonders bevorzugt entlang des Kopfumfanges (Linie 26).

Im Beispiel aus Fig. 10 unterbrechen die weichelastischen Bereiche 6" die Schweissfläche 26, so dass dort ungeschweissten Stellen 27 entstehen. Diese sind vorteilhaft an der Seite des Kopfteils 1 angeordnet, während die in Längsrichtung vorderen und hinteren Bereiche des Trägerelements 5 mit dem Kopfteil 1 fest verschweisst sind. Dadurch wird ein sicherer Halt des Trägerelements 5 gewährleistet, da durch die Putzbewegung und entsprechende Hebelkräfte der vordere und hintere Bereich der grössten Belastung ausgesetzt ist.

Die ungeschweissten Stellen 27 werden vorliegend durch die weichelastischen Bereiche 6" nach Art einer Dichtlippe abgedichtet, so dass kein oder nur wenig Wasser in den Hohlraum 28 eindringen kann. Für eine gute Dichtfunktion wird vorzugsweise Material mit einer Shore A Härte von 50 oder weniger gewählt. Ungeschweisste Stellen zwischen Kopfteil und Trägerelement können auch gezielt eingesetzt werden, um eine gewisse Flexibilität zwischen den beiden Hartkomponenten zu erreichen.

Fig. 11 zeigt ein weiteres Beispiel für eine im AFT-Verfahren hergestellte Zahnbürste mit zwei segelartigen weichelastischen Reinigungselementen 6 in verschiedenen Ansichten. Das Trägerelement 5 ist an seiner Peripherie vollständig mit weichelastischem Material 6' umgeben, das im montierten Zustand (Aufsichtdarstellung Fig 11a) das Kopfteil 1 an seinem äusseren Umfang an der Oberseite vollständig umschliesst und als Aufprallschutz dient. In Bereichen 6" dient das Weichmaterial als Halterung für seitliche Borstenbündel 3, die durch das weichelastische Material 6" hindurchgeführt sind.

Wie aus Fig. 11c hervorgeht, berühren sich die Hartkomponenten von Trägerelement 5 und Kopfteil 1 entlang einer Fläche 26 unterhalb der Weichkomponente im Bereich 6' und können hier mittels Ultraschall verschweisst werden. Die Schweissfläche 26 ist durch die seitlichen Bereiche 6" unterbrochen, wobei jedoch, wie oben beschrieben, eine ausreichende Haltewirkung erzielt wird. Der Hohlraum 28 unterhalb des Trägerelements 5 wird durch die weichelastischen Bereiche 6" und die entlang der Fläche 26 verschweissten Stellen abgedichtet.

Die oben mit Bezug auf Fig. 10 und 11 beschriebene Art der Verschweissung und Abdichtung der Komponenten kann mit Vorteil auch bei anderen Zahnbürsten eingesetzt werden.

## Patentansprüche

1. Zahnbürste mit einem Handgriff (2) und einem Kopfteil (1), Borstenbündeln (3) und einer weichelastischen Struktur (6, 6', 6"), wobei die weichelastische Struktur (6, 6', 6") mindestens ein weichelastisches Reinigungselement (6) bildet, wobei das Reinigungselement (6) in einem für seine Aufnahme bestimmten Bereich (20) eines plattenförmigen Trägerelements (5) angebracht ist, das Trägerelement (5) eine Vorderseite und eine Rückseite aufweist und aus einem Hartmaterial besteht, das Trägerelement (5) Löcher (21) und/oder ganz oder teilweise mit weichelastischem Material gefüllte Aussparungen (24), zur Bildung von elastischen Materialbereichen (6') mit weiteren Löchern (21') aufweist, die Borstenbündel (3) durch die Löcher (21) beziehungsweise weiteren Löcher (21') hindurchgeführt und zur Befestigung am Trägerelement (5) beziehungsweise am weichelastischen Material mit ihren im Anwendungsfall dem Kopfteil (1) zugewandten rückwärtigen Enden (3a) ausgeschmolzen, verschweisst oder verklebt sind, und das Trägerelement mit dem Kopfteil (1) verbunden ist, so dass die Rückseite des Trägerelements (5) dem Kopfteil (1) zugewandt ist.

2. Zahnbürste nach Anspruch 1, **dadurch gekennzeichnet, dass** die Verbindung zwischen dem Kopfteil (1) und dem Trägerelement (5) unlösbar ist.

3. zahnbürste nach Anspruch 1 oder 2, **dadurch gekennzeichnet, dass** das Trägerelement (5) aus demselben Material wie der Kopfteil (1) besteht.

4. Zahnbürste nach einem der Ansprüche 1 bis 3, **dadurch gekennzeichnet, dass** das Trägerelement (5) aus einem Material besteht ausgewählt aus der Gruppe bestehend aus Polypropylen, Styrol-Acryl-Nitril, Polyester, Acryl-Nitril-Butadienstyrol (ABS) oder Isoplast^{®}.

5. Zahnbürste nach einem der Ansprüche 1 bis 4, **dadurch gekennzeichnet, dass** die weichelastische Struktur (6, 6' , 6") am Trägerelement (5) angeordnet ist, die weichelastische Struktur (6, 6', 6'') und das Trägerelement (5) im Mehrkomponenten-Spritzgussverfahren herstellbar sind und eine unlösbare Verbindung zwischen der weichelastischen Struktur (6, 6', 6'') und dem Trägerelement (5) besteht.

6. Zahnbürste nach einem der Ansprüche 1 bis 5, **dadurch gekennzeichnet, dass** die weichelastische Struktur (6, 6', 6'') aus einem thermoplastischen Elastomer besteht.

7. Zahnbürste nach einem der Ansprüche 1 bis 6, **dadurch gekennzeichnet, dass** die weichelastische Struktur (6, 6', 6'') eine Shore A Härte von weniger als 90 aufweist.

8. Zahnbürste nach einem der Ansprüche 1 bis 7, **dadurch gekennzeichnet, dass** das Reinigungselement (6), das keine Borstenfilamente aufweist, flächig geformt und mittig auf dem Trägerelement (5) angeordnet ist.

9. Zahnbürste nach einem der Ansprüche 1 bis 8, **dadurch gekennzeichnet, dass** die elastischen Materialbereiche (6') eine Mehrzahl weiterer Löcher (21') zur Ausnahme mehrerer Borstenbündel (3) aufweisen und eine Gruppe von benachbarten Borstenbündeln bildet.

10. Zahnbürste nach einem der Ansprüche 1 bis 9, **dadurch gekennzeichnet, dass** ein Grenzbereich zwischen dem Trägerelement (5) und dem Kopfteil (1) mit weichelastischem Material bedeckt ist.

11. Zahnbürste nach einem der Ansprüche 1 bis 10, **dadurch gekennzeichnet, dass** die weichelastische Struktur (6, 6', 6'') seitlich am Trägerelement (5) angeordnete Bereiche (6") umfasst.

12. Zahnbürste nach Anspruch 11, **dadurch gekennzeichnet, dass** die seitlich am Trägerelement (5) angeordneten Bereiche (6") im montierten Zustand seitlich mit der Aussenkontur des Kopfteils (1) abschliessen.

13. Zahnbürste nach Anspruch 11, **dadurch gekennzeichnet, dass** die seitlich am Trägerelement (5) angeordneten Bereiche (6") im montierten Zustand seitlich über die Aussenkontur des Kopfteils (1) hinausragen.

14. Zahnbürste nach einem der Ansprüche 1 bis 13, **dadurch gekennzeichnet dass** der Anspritzpunkt der weichkomponente an der borstentragenden Seite des Trägerelements (5) angeordnet ist.

15. Zahnbürste nach einem der Ansprüche 1 bis 14, **dadurch gekennzeichnet, dass** der Bürstenkopf (1) an seinem seitlichen Rand beziehungsweise die Ausnehmung (13) seitliche Öffnungen (25) aufweist, die an die zuvor an das Trägerelement (5) angespritzten seitlichen weichelastischen Bereiche (6") angepasst sind.

16. Verfahren zur Herstellung einer Zahnbürste, umfassend, dass ein Handgriff (2) und ein Kopfteil (1) bereitgestellt wird, ein plattenförmiges Trägerelement (5) bereitgestellt wird, welches eine Vorderseite, eine Rückseite, vorbereitete Bereiche (20), Aussparungen (24) und/oder Löcher (21) aufweist sowie aus einem Hartmaterial besteht;
wobei eine weichelastische Struktur (6, 6', 6") mindestens ein weichelastisches Reinigungselement (6) bildet und in den vorbereiteten Bereich (20) angespritzt wird;
eine Mehrzahl von Borstenbündeln (3) bereitgestellt und durch die borstenaufnehmenden Löcher (21) im Trägerelement (5) und/oder weitere Löcher (21') hindurchgeführt' werden, wobei die Aussparungen (24) ganz oder teilweise, zur Bildung von elastischen Materialbereicheri (6'), mit weichelastischem Material gefüllt werden und die elastischen Materialbereiche (6') die weiteren Löcher (21') haben; und
die rückwärtigen Enden (3a) der Borsten an der Rückseite des Trägerelements (5) beziehungsweise am weichelastischen Material durch Aufschmelzen, Schweissen oder Verkleben befestigt werden.

17. verfahren nach Anspruch 16, **dadurch gekennzeichnet, dass** das Trägerelement (5) mit dem Kopfteil (1) unlösbar verbunden wird.

18. Verfahren nach einem der Ansprüche 16 oder 17, **dadurch gekennzeichnet, dass** das Trägerelement (5) mit dem Kopfteil (1) durch Verklemmen, Verschnappen, Nieten, durch Kleben, durch Ultraschallschweissen oder thermisch durch Schweissen oder sonstige Wärmezufuhr verbunden wird.

19. Verfahren nach einem der Ansprüche 16 bis 18, **dadurch gekennzeichnet, dass** die Borstenfilamente (3) geschnitten und/oder abgerundet werden, bevor die Borsten am Trägerelement (5) und/oder an der der weichelastischen Struktur (6, 6', 6"') befestigt werden.

20. Verfahren nach einem der Ansprüche 16 bis 19, **dadurch gekennzeichnet, dass** die weichelastische Struktur (6, 6', 6'') und das Trägerelement (5) im Zweikomponentenspritzgiessverfahren hergestellt werden, wobei eine unlösbare Verbindung zwischen der weichelastischen Struktur (6, 6', , 6'') und dem Trägerelement (5) hergestellt wird.

21. Verfahren nach einem der Ansprüche 16 bis 20, **dadurch gekennzeichnet, dass** das Trägerelement (5) nach dem _{B}eborsten und der Herstellung der weichelastischen Struktur in eine Ausnehmung im Bürstenkopf eingesetzt wird und mit dem Bürstenkopf unlösbar verbunden wird.

22. Verfahren nach einem der Ansprüche 16 bis 21, **dadurch gekennzeichnet, dass** ein Anspritzpunkt für das weichelastische Material an der Vorderseite des Trägerelements (5) bereitgestellt wird.

23. Verfahren nach einem der Ansprüche 16 bis 22, **dadurch gekennzeichnet, dass** das Trägerelement (5) an seiner Rückseite eine als Schweissrand (26') wirkende, im Anwendungsfall dem Kopfteil (1) zugewandte, vorzugsweise spitze Kante (30) aufweist, wobei die Berührungsfläche eine Schweissfläche (26) definiert, und das Trägerelement (5) mittels Ultraschallschweissen mit dem Kopfteil (1) verbunden wird.

24. Verfahren nach einem der Ansprüche 16 bis 23, **dadurch gekennzeichnet, dass** eine Berührungsfläche zwischen dem Kopfteil (1) und dem Trägerelement (5) zu wenigstens 25% verschweisst wird.

25. Verfahren nach einem der Ansprüche 16 bis 24, **dadurch gekennzeichnet, dass** der Kopfteil (1) und das Trägerelement (5) in den in Längsrichtung vorderen und hinteren Bereichen des Kopfteils (1) verschweisst werden, wobei gewisse Bereiche ungeschweisst gelassen werden.

26. Verfahren nach einem der Ansprüche 16 bis 25, **dadurch gekennzeichnet, dass** der Kopfteil (1) und das Trägerelement (5) nur punktuell verschweisst werden.

27. Verfahren nach einem der Ansprüche 16 bis 26, **dadurch gekennzeichnet, dass** der Kopfteil (1) und das Trägerelement (5) entlang as ICOpfumfangs des Trägerelements (5) verschweisst werden, wobei gewisse ungeschweisste Stellen ausgebildet werden.

28. Verfahren nach einem der Ansprüche 16 bis 27, **dadurch gekennzeichnet, dass** das Kopfteil (1) beziehungsweise die Ausnehmung (13) mit seitlichen Öffnungen (25) versehen werden, die an die zuvor am Trägerelement (5) angespritzten seitlichen weichelastischen Bereiche (6") angepasst wurden.

## Claims

1. Toothbrush with a handle (2) and a head part (1), clusters of bristles (3) and a flexible structure (6, 6', 6"), wherein the flexible structure (6, 6' , 6") forms at least one flexible cleaning element (6), wherein the cleaning element (6) is fitted in a region (20) intended for accommodating it in a plate-like carrier element (5), the carrier element (5) has a front side and a rear side and consists of a hard material, the carrier element (5) has holes (21) and/or cutouts (24) wholly or partially filled with flexible material, in order to form elastic material regions (6') with further holes (21'), the clusters of bristles (3) are guided through the holes (21) and/or further holes (21') and are fused, welded or adhesively bonded by way of their rear ends (3a), which in the application case are directed towards the head part (1), for fastening on the carrier element (5) or on the flexible material, and the carrier element is connected to the head part (1), so that the rear side of the carrier element (5) is directed toward the head part (1).

2. Toothbrush according to Claim 1, **characterized in that** the connection between the head part (1) and the carrier element (5) is non-releasable.

3. Toothbrush according to Claims 1 or 2, **characterized in that** the carrier element (5) consists of the same material as the head part (1).

4. Toothbrush according to one of Claims 1 to 3, **characterized in that** the carrier element (5) consists of a material selected from the group made up of polypropylene, styrene-acrylonitrile, polyester, acrylonitrile-butadiene-styrene (ABS) or Isoplast®.

5. Toothbrush according to one of Claims 1 to 4, **characterized in that** the flexible structure (6, 6', 6" ) is arranged on the carrier element (5), the flexible structure (6, 6', 6'') and the carrier element (5) can be produced by multi-component injection moulding and there is a non-releasable connection between the flexible structure (6, 6', 6") and the carrier element (5).

6. Toothbrush according to one of Claims 1 to 5, **characterized in that** the flexible structure (6, 6', 6 ") consists of a thermoplastic elastomer.

7. Toothbrush according to one of Claims 1 to 6, **characterized in that** the flexible structure (6, 6', 6") has a Shore A hardness of less than 90.

8. Toothbrush according to one of Claims 1 to 7, **characterized in that** the cleaning element (6), which does not have any bristle filaments, is of sheet-like form and is arranged centrally on the carrier element (5).

9. Toothbrush according to one of Claims 1 to 8, **characterized in that** the elastic material regions (6') have a plurality of further holes (21') for accommodating a plurality of clusters of bristles (3), and this forms a group of adjacent clusters of bristles.

10. Toothbrush according to one of Claims 1 to 9, **characterized in that** a boundary region between the carrier element (5) and the head part (1) is covered with flexible material.

11. Toothbrush according to one of Claims 1 to 10, **characterized in that** the flexible structure (6, 6', 6") comprises regions (6") arranged laterally on the carrier element (5).

12. Toothbrush according to Claim 11, **characterized in that**, in the assembled state, the regions (6"), which are arranged laterally on the carrier element (5), terminate laterally with the outer contour of the head part (1).

13. Toothbrush according to Claim 11, **characterized in that**, in the assembled state, the regions (6''), which are arranged laterally on the carrier element (5), project laterally beyond the outer contour of the head part (1).

14. Toothbrush according to one of Claims 1 to 13, **characterized in that** the injection point of the soft component is arranged on the bristle-carrying side of the carrier element (5).

15. Toothbrush according to one of Claims 1 to 14, **characterized in that** the brush head (1), on its lateral border or the cutout (13) has lateral openings (25), which are adapted to the lateral flexible regions (6") previously moulded on the carrier element (5).

16. Method for producing a toothbrush, comprising the following steps:
providing a handle (2) and a head part (1), providing a plate-like carrier element (5), which has a front side, a rear side, prepared regions (20), cutouts (24) and/or holes (21) and consists of a hard material;
wherein a flexible structure (6, 6', 6") forms at least one flexible cleaning element (6) and is moulded into the prepared region (20);
a plurality of clusters of bristles (3) are provided and are guided through the bristle-accommodating holes (21) in the carrier element (5) and/or further holes (21'), wherein the cutouts (24) are filled wholly or partially with flexible material in order to form elastic material regions (6'), and the elastic material regions (6') have the further holes (21'); and
the rear ends (3a) of the bristles are fused, welded or adhesively bonded to the rear side of the carrier element (5) or to the flexible material.

17. Method according to Claim 16, **characterized in that** the carrier element (5) is connected in a non-releasable manner to the head part (1).

18. Method according to either of Claims 16 and 17, **characterized in that** the carrier element (5) is connected to the head part (1) by clamping, snap-fitting, riveting, by adhesive bonding, by ultrasonic welding or thermally by welding or other methods of supplying heat.

19. Method according to one of Claims 16 to 18, **characterized in that** the bristle filaments (3) are cut and/or rounded before the bristles are fastened on the carrier element (5) and/or on the flexible structure (6, 6', 6'').

20. Method according to one of Claims 16 to 19, **characterized in that** the flexible structure (6, 6', 6 ") and the carrier element (5) are produced by a two-component injection-moulding process, with a non-releasable connection being established between the flexible structure (6, 6', 6'') and the carrier element (5).

21. Method according to one of Claims 16 to 20, **characterized in that** the carrier element (5), following the bristle-covering operation and production of the flexible structure, is inserted into a cutout in the brush head and is connected in a non-releasable manner to the brush head.

22. Method according to one of Claims 16 to 21, **characterized in that** an injection point for the flexible material is provided on the front side of the carrier element (5).

23. Method according to one of Claims 16 to 22, **characterized in that** the carrier element (5), on its rear side, has a preferably pointed edge (30) which acts as a welding border (26') and in the application case is directed towards the head part (1), wherein the contact surface defines a welding surface (26), and the carrier element (5) is connected to the head part (1) by means of ultrasonic welding.

24. Method according to one of Claims 16 to 23, **characterized in that** a contact surface between the head part (1) and the carrier element (5) is welded over at least 25%.

25. Method according to one of Claims 16 to 24, **characterized in that** the head part (1) and the carrier element (5) are welded in the longitudinally front and rear regions of the head part (1), wherein certain regions are left non-welded.

26. Method according to one of Claims 16 to 25, **characterized in that** the head part (1) and the carrier element (5) are subjected just to spot welding.

27. Method according to one of Claims 16 to 26, **characterized in that** the head part (1) and the carrier element (5) are welded along the head circumference of the carrier element (5), wherein certain non-welded locations are formed.

28. Method according to one of Claims 16 to 27, **characterized in that** the head part (1) or the cutout (13) is provided with lateral openings (25), which have been adapted to the lateral flexible regions (6") previously moulded on the carrier element (5).

## Revendications

1. Brosse à dents comprenant un manche (2) et une partie de tête (1), des faisceaux de poils (3) et une structure élastique souple (6, 6', 6"), la structure élastique souple (6, 6', 6'') formant au moins un élément de nettoyage élastique souple (6), l'élément de nettoyage (6) étant monté dans une partie (20) d'un élément porteur en forme de plaque (5) qui est destinée à sa réception, l'élément porteur (5) présentant un côté avant et un côté arrière et se composant d'un matériau dur, l'élément porteur (5) comprenant des trous (21) et/ou des évidements (24) remplis totalement ou en partie de matériau élastique souple, pour former des parties (6') en matériau élastique dotées de trous supplémentaires (21'), les faisceaux de poils (3) étant guidés à travers les trous (21) ou les trous supplémentaires (21'), et pour la fixation sur l'élément porteur (5) ou sur le matériau élastique souple, étant fondus, soudés ou collés, avec leurs extrémités arrière (3a) orientées vers la partie de tête (1) lors de l'utilisation, et l'élément porteur étant connecté à la partie de tête (1), de telle sorte que le côté arrière de l'élément porteur (5) soit orienté vers la partie de tête (1).

2. Brosse à dents selon la revendication 1, **caractérisée en ce que** la connexion entre la partie de tête (1) et l'élément porteur (5) est permanente.

3. Brosse à dents selon la revendication 1 ou 2, **caractérisée en ce que** l'élément porteur (5) se compose du même matériau que celui de la partie de tête (1).

4. Brosse à dents selon l'une quelconque des revendications 1 à 3, **caractérisée en ce que** l'élément porteur (5) est constitué d'un matériau choisi parmi le groupe constitué du polypropylène, du styrène-acrylonitrile, du polyester, de l'acrylonitrile butadiène styrène (ABS) ou de l'Isoplast^{®}.

5. Brosse à dents selon l'une quelconque des revendications 1 à 4, **caractérisée en ce que** la structure élastique souple (6, 6', 6") est disposée sur l'élément porteur (5), la structure élastique souple (6, 6', 6") et l'élément porteur (5) peuvent être fabriqués par un procédé de moulage par injection à plusieurs composants et il existe entre la structure élastique souple (6, 6', 6") et l'élément porteur (5) une connexion permanente.

6. Brosse à dents selon l'une quelconque des revendications 1 à 5, **caractérisée en ce que** la structure élastique souple (6, 6', 6") se compose d'un élastomère thermoplastique.

7. Brosse à dents selon l'une quelconque des revendications 1 à 6, **caractérisée en ce que** la structure élastique souple (6, 6', 6") a une dureté Shore A de moins de 90.

8. Brosse à dents selon l'une quelconque des revendications 1 à 7, **caractérisée en ce que** l'élément de nettoyage (6), qui ne comprend pas de filaments de poils, est formé de manière plane et est disposé de manière centrale sur l'élément porteur (5).

9. Brosse à dents selon l'une quelconque des revendications 1 à 8, **caractérisée en ce que** les parties (6') en matériau élastique comprennent une pluralité de trous supplémentaires (21') pour la réception de plusieurs faisceaux de poils (3) et forment un groupe de faisceaux de poils adjacents.

10. Brosse à dents selon l'une quelconque des revendications 1 à 9, **caractérisée en ce qu'**une région limite entre l'élément porteur (5) et la partie de tête (1) est recouverte de matériau élastique souple.

11. Brosse à dents selon l'une quelconque des revendications 1 à 10, **caractérisée en ce que** la structure élastique souple (6, 6', 6") comporte des parties (6") disposées latéralement sur l'élément porteur (5).

12. Brosse à dents selon la revendication 11, **caractérisée en ce que** les parties (6'') disposées latéralement sur l'élément porteur (5) se raccordent latéralement au contour extérieur de la partie de tête (1) dans l'état monté.

13. Brosse à dents selon la revendication 11, **caractérisée en ce que** les parties (6") disposées latéralement sur l'élément porteur (5) font saillie latéralement au-delà du contour extérieur de la partie de tête (1) dans l'état monté.

14. Brosse à dents selon l'une quelconque des revendications 1 à 13, **caractérisée en ce que** le point d'injection des composants souples est disposé du côté de l'élément porteur (5) portant les poils.

15. Brosse à dents selon l'une quelconque des revendications 1 à 14, **caractérisée en ce que** la tête de brosse (1), sur son bord latéral, ou l'évidement (13) comprend des ouvertures latérales (25) qui sont adaptées aux parties élastiques souples (6") latérales moulées préalablement par injection sur l'élément porteur (5).

16. Procédé de fabrication d'une brosse à dents, comprenant ce qui suit :
un manche (2) et une partie de tête (1) sont fournis, un élément porteur en forme de plaque (5) est fourni, lequel présente un côté avant, un côté arrière, des parties préparées (20), des évidements (24) et/ou des trous (21), et est constitué d'un matériau dur ;
une structure élastique souple (6, 6', 6'') formant au moins un élément de nettoyage élastique souple (6) et étant moulée par injection dans la partie préparée (20) ;
une pluralité de faisceaux de poils (3) est fournie et est guidée à travers les trous recevant des poils (21) dans l'élément porteur (5) et/ou des trous supplémentaires (21'), les évidements (24) étant remplis totalement ou en partie d'un matériau élastique souple pour former des parties (6') en matériau élastique et les parties (6') en matériau élastique ayant les trous supplémentaires (21') ; et
les extrémités arrière (3a) des poils sont fixées sur le côté arrière de l'élément porteur (5) ou sur le matériau élastique souple par fusion, soudage ou collage.

17. Procédé selon la revendication 16, **caractérisé en ce que** l'élément porteur (5) est connecté de manière permanente à la partie de tête (1).

18. Procédé selon la revendication 16 ou 17, **caractérisé en ce que** l'élément porteur (5) est connecté à la partie de tête (1) par serrage, encliquetage, rivetage, ou par collage, soudage aux ultrasons ou thermiquement par soudage ou autre apport de chaleur.

19. Procédé selon l'une quelconque des revendications 16 à 18, **caractérisé en ce que** les filaments de poils (3) sont coupés et/ou arrondis avant que les poils soient fixés sur l'élément porteur (5) et/ou sur la structure élastique souple (6, 6', 6'').

20. Procédé selon l'une quelconque des revendications 16 à 19, **caractérisé en ce que** la structure élastique souple (6, 6', 6") et l'élément porteur (5) sont fabriqués dans un procédé de moulage par injection à deux composants, une connexion permanente étant créée entre la structure élastique souple (6, 6', 6") et l'élément porteur (5).

21. Procédé selon l'une quelconque des revendications 16 à 20, **caractérisé en ce que** l'élément porteur (5), après le garnissage de poils et la fabrication de la structure élastique souple, est inséré dans un évidement dans la tête de brosse et connecté de manière permanente à la tête de brosse.

22. Procédé selon l'une quelconque des revendications 16 à 21, **caractérisé en ce qu'**un point d'injection pour le matériau élastique souple est prévu au niveau du côté avant de l'élément porteur (5).

23. Procédé selon l'une quelconque des revendications 16 à 22, **caractérisé en ce que** l'élément porteur (5) présente sur son côté arrière un bord de préférence pointu (30) agissant en tant que bord soudé (26') et orienté vers la partie de tête (1) lors de l'utilisation, la surface de contact définissant une surface de soudage (26), et l'élément porteur (5) étant connecté à la partie de tête (1) au moyen d'un soudage aux ultrasons.

24. Procédé selon l'une quelconque des revendications 16 à 23, **caractérisé en ce qu'**une surface de contact est soudée entre la partie de tête (1) et l'élément porteur (5), au moins sur 25%.

25. Procédé selon l'une quelconque des revendications 16 à 24, **caractérisé en ce que** la partie de tête (1) et l'élément porteur (5) sont soudés dans les parties avant et arrière, dans la direction longitudinale, de la partie de tête (1), certaines parties restant non soudées.

26. Procédé selon l'une quelconque des revendications 16 à 25, **caractérisé en ce que** la partie de tête (1) et l'élément porteur (5) ne sont soudés que de manière ponctuelle.

27. Procédé selon l'une quelconque des revendications 16 à 26, **caractérisé en ce que** la partie de tête (1) et l'élément porteur (5) sont soudés le long de la circonférence de la tête de l'élément porteur (5), certains points non soudés étant réalisés.

28. Procédé selon l'une quelconque des revendications 16 à 27, **caractérisé en ce que** la partie de tête (1) ou l'évidement (13) est pourvu d'ouvertures latérales (25) qui sont adaptées aux parties élastiques souples (6") latérales moulées préalablement par injection sur l'élément porteur (5).
